# EUROPEAN PATENT APPLICATION

(11) **EP 4 443 624 A1**
(43) Date of publication of application: **09.10.2024**
(21) Application number: 22962593.4
(22) Date of filing: 16.12.2022
(51) Int. Cl.: H01M 50/287, H01M 10/613, H01M 50/258

(54) **MODULAR ENERGY STORAGE BATTERY**

(30) Priority: 17.10.2022 CN 202211269232
(71) Applicant: Pylon Technologies Co., Ltd., Shanghai 201203 (CN)
(72) Inventor: AN, Kunkun, Shanghai 201203 (CN); TAN, Licheng, Shanghai 201203 (CN); ZHU, Zhendong, Shanghai 201203 (CN)
(74) Representative: Loyer & Abello
(86) International application number: PCT/CN2022/139709
(87) International publication number: WO 2024/082417

(57) **Abstract**

The present application relates to the technical field of batteries, and provides a modular energy storage battery. The modular energy storage battery comprises a battery module, a fixing frame, an electrical integration module, and a panel; the fixing frame is detachably arranged at one end of the battery module; the electrical integration module is detachably embedded in the fixing frame; the panel is detachably arranged on the electrical integration module. During actual mounting, the electrical integration module can be embedded and mounted in the fixing frame, and then the panel is mounted, so that separate components can be conveniently replaced, processing and assembling are easy, the end surface structure of the battery module is more simplified, and manufacturing costs are also reduced. Moreover, the electrical integration module is shielded by means of the panel, so that the exposure of more electrical structure can be avoided, and the safety and the reliability are improved. Compared with the prior art, the modular energy storage battery provided by the present application uses a modular structural form, is convenient to assemble and high in safety, is easy in replacement of separate modules, is easy to process and reduces the manufacturing costs.

## Description

### CROSS-REFERENCE TO RELATED APPLICATION

The present invention claims the priority to the Chinese patent application with the filling No. 202211269232.8 filed with the Chinese Patent Office on October 17, 2022, and entitled "MODULAR ENERGY STORAGE BATTERY", the contents of which are incorporated herein by reference in entirety.

### TECHNICAL FIELD

The present invention relates to the technical field of batteries, and particularly to a modular energy storage battery.

### BACKGROUND ART

For applications in energy storage containers, where the battery module consists of aluminum-cased cells with terminal poles provided at both ends, generally, after the energy storage battery modules are mounted in the container, more high-voltage electrical connections and low-voltage signal connections are exposed, which poses safety risks and is not aesthetically pleasing. Additionally, the conventional battery modules are of an integrated structure, where the electrical components are directly mounted on the battery module, such that the integration is poor and the mounting is cumbersome, which is not conducive to quick assembly. Moreover, the safety is lower, and it is not convenient to replace individual components separately.

### SUMMARY

The objective of the present invention is to provide a modular energy storage battery, which adopts a modular structure so that it is easy to assemble with high safety, thus facilitating the replacement of individual modules. Additionally, it is easy to process and reduces manufacturing costs.

The embodiments of the present invention are implemented as follows.

A modular energy storage battery is provided, which includes a battery module, a fixed frame, an electrical integration module, and a panel. The fixed frame is detachably arranged at one end of the battery module. The electrical integration module is detachably embedded within the fixed frame. The panel is detachably arranged on the electrical integration module.

Further, the electrical integration module includes an insulating frame and an electrical component. The insulating frame is detachably embedded within the fixed frame. The electrical component is integrated and arranged on the insulating frame, and is electrically connected to the battery module.

Further, the electrical component includes an output bar and a control unit arranged at intervals. The output bar is mounted on the insulating frame via a buckle. The control unit is embedded on a side of the insulating frame away from the battery module and is electrically connected to the battery module.

Further, the insulating frame is also provided with a safety cover plate. The safety cover plate is capped over the control unit and detachably connected to the insulating frame so as to protect the control unit.

Further, the electrical component also includes a grounding assembly, wherein the grounding assembly is arranged on the insulating frame and connects a grounding point of the control unit to the fixed frame.

Further, the insulating frame is arranged with a fire sprinkler, wherein the fire sprinkler penetrates the insulating frame and corresponds to an end face of the battery module.

Further, the modular energy storage battery also includes a fan, and the electrical integration module is further arranged therein with an air guide gap. The fan is arranged on the electrical integration module and corresponds to the air guide gap, which is configured to extract the gas within the air guide gap.

Further, the battery module includes a battery pack and a battery casing. The battery pack is housed within the battery casing. The fixed frame is arranged at a front end of the battery casing, and the battery pack and at least a portion of an inner wall of the battery casing are arranged at intervals, so as to form the air guide gap between the battery casing and the battery pack.

Further, a rear end of the battery casing is provided with an air intake screen opening, wherein the air intake screen opening and the air guide gap are communicated.

Further, the battery casing includes a front-end plate, a rear-end plate, a left-side plate, a right-side plate, a cover plate, and a bottom plate. The front-end plate, the rear-end plate, the left-side plate, the right-side plate, the cover plate, and the bottom plate together form a holding chamber. The battery pack is arranged within the holding chamber. The battery pack is arranged at intervals with the left-side plate, the right-side plate, and the cover plate, and the air guide gap is thus formed.

Further, the air intake screen opening includes a first air intake screen opening, a second air intake screen opening, and a third air intake screen opening. The first air intake screen opening is arranged at an end of the left-side plate away from the fixed frame, the second air intake screen opening is arranged at an end of the right-side plate away from the fixed frame, and the third air intake screen opening is arranged at an end of the cover plate away from the fixed frame. Air outlets communicating with the air guide gap are formed at both upper and lower sides of the front-end plate. The air outlets correspond to the fan. The first air intake screen opening, the second air intake screen opening, and the third air intake screen opening are communicated with the air guide gap.

Further, edges on both sides of the cover plate are provided with recessed platforms, wherein the recessed platforms are abutted and supported on surfaces of the battery pack, and divide the air guide gap into a left air duct, a right air duct, and an upper air duct. The left-side plate and a corresponding surface of the battery pack are arranged at intervals and form the left air duct, the right-side plate and a corresponding surface of the battery pack form the right air duct, and the cover plate and a corresponding surface of the battery pack form the upper air duct.

Further, the battery pack includes multiple foams, multiple insulation pads, and multiple cells arranged by stacking. Each foam is attached between two adjacent cells. Each insulation pad is also attached between two adjacent cells. The multiple foams and the multiple insulation pads are provided in a staggered manner. A foam or an insulation pad is arranged between every two adjacent cells.

Further, the battery casing is provided with an abutting protrusion. The abutting protrusion abuts against the surface of the battery pack, so as to form a gap between the battery pack and the surface of the battery casing. The gap is filled with a thermally conductive adhesive layer, wherein the thermally conductive adhesive layer is configured to bond the battery pack and the battery casing together and transfer the heat generated by the battery pack to the battery casing.

The embodiments of the present invention comprise the following benefit effects.

The embodiments provide a modular energy storage battery in which a fixed frame is detachably arranged at one end of the battery module, an electrical integration module is embedded and mounted in the fixed frame, and a panel is detachably arranged on the electrical integration module. By integrally mounting the panel, the electrical integration module, and the fixed frame, and detachably mounting them to the end portion of the battery module, a modular structure is achieved, thus making it very convenient for replacement or maintenance by directly removing the fixed frame. During actual mounting, the electrical integration module can first be embedded and mounted in the fixed frame, with the panel then mounted to form a modular structure. This modular structure can then be mounted at one end of the battery module, which is highly convenient. Additionally, it can facilitate the replacement of individual components, simplify processing and assembly, and avoid the electrical component from sequentially and directly mounting on the end face of the battery module. It makes the end face structure of the battery module more simplified and also reduces the manufacturing cost. At the same time, the panel shields the electrical integration module, which can prevent more of the electrical structures from being exposed, so as to enhance safety and reliability. Compared with the prior art, the modular energy storage battery proved in the present invention adopts a modular structure, which is easy to assemble with high safety, thus facilitating the replacement of individual modules. Additionally, it is easy to process and reduces manufacturing costs.

### BRIEF DESCRIPTION OF DRAWINGS

To more clearly illustrate the technical solutions of the embodiments of the present invention, the following will briefly introduce the drawings used in the embodiments. It should be understood that the following drawings only show some embodiments of the present invention, and therefore they should not be regarded as a limitation on the scope. Those ordinary skilled in the art can also obtain other related drawings based on these drawings without inventive effort.
FIG. 1 is a schematic view of an overall structure of the modular energy storage battery provided by the present invention;
FIG. 2 is a schematic view of an exploded structure of the modular energy storage battery provided by the present invention;
FIG. 3 is a schematic view of an overall structure of an electrical integration module in FIG. 2;
FIG. 4 is a schematic view of an exploded structure of the electrical integration module in FIG. 2;
FIG. 5 is a schematic view of an overall structure of a battery module in FIG. 2;
FIG. 6 is a schematic view of an exploded structure of the battery module in FIG. 2;
FIG. 7 is a sectional view of an internal structure of the battery module in FIG. 2; and
FIG. 8 is a schematic view of an exploded structure of a battery pack in FIG. 6.

### Reference numerals:

100- modular energy storage battery; 110- battery module; 111- battery pack; 1111- foam; 1113- insulation pad; 1115- cell; 112- front-end plate; 113- left-side plate; 1131- first air intake screen opening; 1133- left air duct; 114- right-side plate; 1141- second air intake screen opening; 1143- right air duct; 115- cover plate; 1151- third air intake screen opening; 1153- upper air duct; 116- bottom plate; 117- recessed platform; 118- abutting protrusion; 119- rear-end plate; 130-fixed frame; 131- mounting lug; 150- electrical integration module; 151- insulating frame; 152-fan; 153- electrical component; 154- output bar; 155- grounding assembly; 156- control unit; 157-safety cover plate; 158- fire sprinkler; 170- panel; 171- air outlet.

### DETAILED DESCRIPTION OF EMBODIMENTS

In order to make the objective, technical solutions, and advantages of the embodiments of the present invention clearer, the technical solutions in the embodiments of the present invention will be clearly and completely described below in conjunction with the drawings in the embodiments of the present invention. Clearly, the described embodiments are part of the embodiments of the present invention and not the entire embodiments. The components of embodiments of the present invention which are generally described and illustrated in the drawings herein can be arranged and designed in a variety of different configurations.

Accordingly, the following detailed description of the embodiments of the present invention provided in the drawings is not intended to limit the scope of the claimed invention, but merely represents selected embodiments of the present invention. Based on the embodiments in the present invention, all other embodiments obtained by those of ordinary skill in the art without making inventive efforts are within the scope of protection of the present invention.

It should be noted that similar numerals and letters denote similar terms in the following drawings so that once an item is defined in one drawing, it does not need to be further discussed in subsequent drawings.

In the description of the present invention, it should be noted that the orientation or positional relationship indicated by the terms "center", "up", "down", "left", "right", "vertical", "horizontal", "inside", "outside", etc. is based on the orientation or positional relationship shown in the drawings or the orientation or positional relationship in which the product of the present invention is customarily placed when used. It is intended only to facilitate the description of the present invention and to simplify the description, and not to indicate or imply that the devices or elements referred to must have a particular orientation, be constructed and operated in a particular orientation. Accordingly, it is not to be construed as a limitation of the present invention. In addition, the terms "first", "second" and "third" are only used to distinguish the descriptive and are not to be construed as indicating or implying relative importance.

In addition, the terms such as "horizontal", and "vertical" do not mean that elements are required to be absolutely horizontal or overhanging, but can be slightly inclined. For example, "horizontal" only means that its direction is more horizontal than "vertical", and it does not mean that the structure must be completely horizontal, but can be slightly inclined.

In the description of the present invention, it is further important to note that unless otherwise clearly stipulated and limited, the terms "provide", "mount", "interconnect", and "connect" should be understood in a broad sense, for example, it can be a fixed connection, a detachable connection, or an integral connection; it can be a mechanical connection, or an electrical connection; and it can be a direct connection, an indirect connection through an intermediary, or an internal communication between two components. Those of ordinary skill in the art can understand the meanings of the above terms in the present invention according to specific situations.

As disclosed in the prior art in the background, for applications in energy storage containers, where the battery module consists of aluminum-cased cells with terminal poles provided at both ends, it will heat up during use, and high temperatures and large temperature differences will have a large impact on battery life. At the same time, the battery module composed of aluminum-cased cells with terminal poles provided at both ends is usually larger in power and volume, and the form is close to that of the battery pack of the automobile power. Moreover, it does not provide pre-tightening force and has poor structural stability. Generally, energy storage battery modules are mounted in the container, more high-voltage electrical connections and low-voltage signal connections are exposed. This poses safety risks and is not aesthetically pleasing. Additionally, conventional battery modules use an integrated structure, where electrical components are directly mounted on the battery module. The integration is poor and the mounting is cumbersome, which is not conducive to quick assembly. Moreover, the safety is lower, and it is not convenient to replace individual components separately. At the same time, battery packs inside the conventional battery modules use a direct stacking method. When thermal runaway occurs, it can easily cause rapid thermal spread, thus affecting the safety of the module under thermal runaway conditions.

In order to solve the above problem, a new modular energy storage battery is proved in the present invention, which adopts a modular structure and is easy to assemble with high safety. The modular energy storage battery is described in detail below.

### First Embodiment

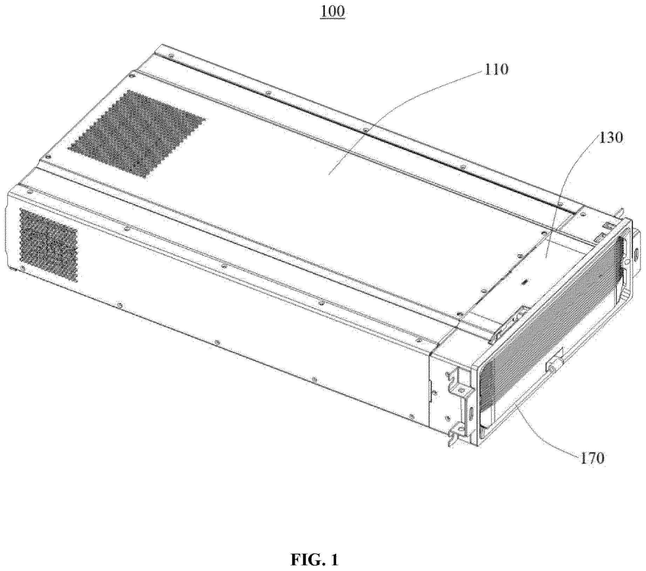

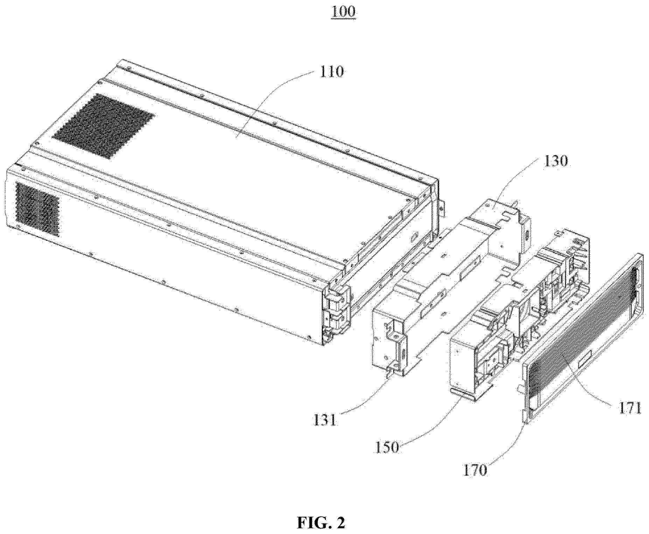

Referring to FIGS. 1 to 2, the embodiment provides a modular energy storage battery 100, which adopts a modular structure so that it is easy to assemble with high safety, thus facilitating the replacement of individual modules. Additionally, it is easy to process and reduces manufacturing costs. Meanwhile, it has good structural stability and good heat dissipation performance, with heat spreading blocking design to ensure the safety of the module under thermal runaway.

The modular energy storage battery 100 provided in the embodiment includes a battery module 110, a fixed frame 130, an electrical integration module, a panel 170, and a fan 152. The fixed frame 130 is detachably arranged at one end of the battery module 110. The electrical integration module 150 is detachably embedded within the fixed frame 130. The panel 170 is detachably arranged on the electrical integration module 150. The electrical integration module 150 is further arranged therein with an air guide gap. The fan 152 is arranged on the electrical integration module 150 and corresponds to the air guide gap, which is configured to extract the gas within the air guide gap.

In the embodiment, the modular energy storage battery 100 is applied in an energy storage container, meaning that the modular energy storage battery 100 is mounted in the container, where the fixed frame 130 is applied to fix the position and the only part exposed after mounting is the panel 170. The panel 170 can be cosmetically designed to make the whole system safe and aesthetically pleasing.

It should be noted that in the embodiment, the electrical integration module 150 is of a modular structure that integrates various electrical components. By integrally mounting the panel 170, the electrical integration module 150, and the fixed frame 130, and detachably mounting them to the end portion of the battery module 110, a modular structure is achieved, thus making it very convenient for replacement or maintenance by directly removing the fixed frame 130. During actual mounting, the electrical integration module 150 can first be embedded and mounted in the fixed frame 130, with the panel 170 then mounted to form a modular structure. This modular structure can then be mounted at one end of the battery module 110, which is highly convenient. Additionally, it can facilitate the replacement of individual components, simplify processing and assembly, and avoid the electrical component 153 from sequentially and directly mounting on the end face of the battery module 110. It makes the end face structure of the battery module 110 more simplified and also reduces the manufacturing cost. At the same time, the panel 170 shields the electrical integration module 150, which can prevent more of the electrical structures from being exposed, so as to enhance safety and reliability.

In the embodiment, the fixed frame 130 is of a sheet metal structure, and the fixed frame 130 is fixed to the front end of the battery module 110 through bolts. The fixed frame 130 is provided with a mounting lug 131. When the modular energy storage battery 100 is mounted on a rack in a container, the mounting lug 131 is fixed to the rack through the bolts so as to fix the battery module.

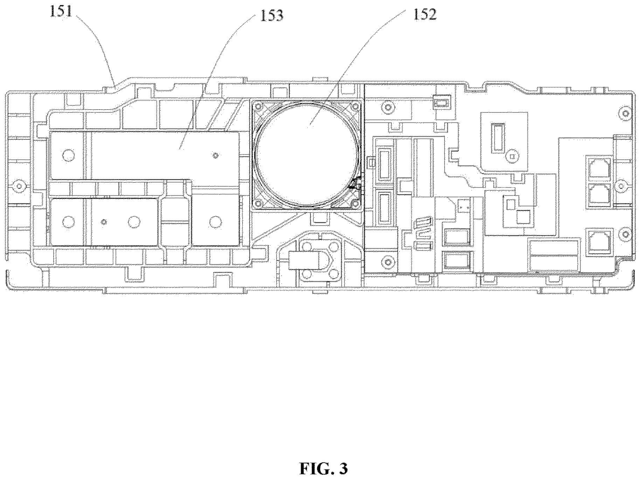

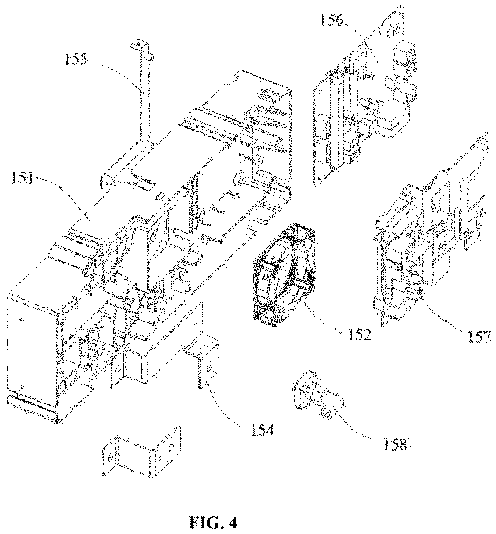

Referring to FIGS. 3 and 4, the electrical integration module 150 includes an insulating frame 151 and an electrical component 153. The insulating frame 151 is threaded through and provided with a containing slot. The fan 152 is assembled in the containing slot and corresponds to an end face of the battery module 110, which is configured for air-cooling the battery module 110. The electrical component 153 is integrated and arranged onto the insulating frame 151, and is electrically connected to the battery module 110. Specifically, the insulating frame 151 is the region for the electrical component 153 to mount. During actual mounting, the electrical component 153, the fan 152, and the insulating frame 151 adopt a modular structure that can be integrally mounted into the fixed frame 130. The sheet metal structure of the fixed frame 130 effectively protects the electrical integration module 150 from damage due to dropping. The insulating frame 151 can be made of plastic material, thus providing insulation and fixing the electrical component 153. The fan 152 can be fixed to the insulating frame 151 through the bolts.

In the embodiment, the electrical component 153 further includes an output bar 154, a grounding assembly 155, and a control unit 156. The output bar 154 is mounted on the insulating frame 151 via a buckle. The control unit 156 and the output bar 154 are arranged at intervals. The control unit 156 is embedded on a side of the insulating frame 151 away from the battery module 110 and is electrically connected to the battery module 110. Additionally, the insulating frame 151 is provided with a safety cover plate 157, and the safety cover plate 157 covers the control unit 156 and is detachably connected to the insulating frame 151. The grounding assembly 155 connects the grounding point of the control unit 156 to the fixed frame 130. The output bar 154 can be a high-voltage output bar 154. The high-voltage output bar 154 is mounted on the insulating frame 151 in a manner of snapping and is exposed, thus achieving output functionality. The control unit 156 can be fixed to the insulating frame 151 via the bolts. The safety cover plate 157 primarily shields and protects the control unit 156 from accidental contact. The grounding assembly 155 connects the grounding point of the control unit 156 to the fixed frame 130, forming an effective grounding loop.

In the embodiment, the insulating frame 151 is further arranged with a fire sprinkler 158, wherein the fire sprinkler 158 penetrates the insulating frame 151 and corresponds to an end face of the battery module 110. Specifically, the fire sprinkler 158 is fixed to the insulating frame 151 via the bolts and can be connected to an external fire suppression pipeline. This can allow the timely discharge of extinguishing agents in the event of thermal runaway. Thus, the firefighting function is realized.

In the embodiment, the panel 170 covers the insulating frame 151 and shields the electrical component 153. The panel 170 is detachably connected to the insulating frame 151. The panel 170 is provided with an air outlet 171, wherein the air outlet 171 is provided in correspondence with the fan 152. Specifically, the air outlet 171 corresponds to the fan 152 and the air outlet 171 can be arranged in the form of a grid. The fan 152 is enabled to extract the gases in the battery module 110 on the one hand, and send the gases out by the air outlet 171 on the other hand, so as to realize air-cooled heat dissipation. The panel 170 is made of plastic material and can be fixed to the insulating frame 151 in a manner of bolts and clips, which can serve as a protective and decorative aesthetic.

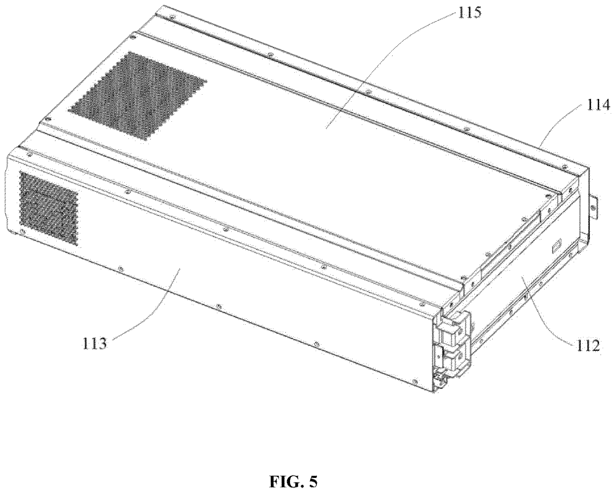

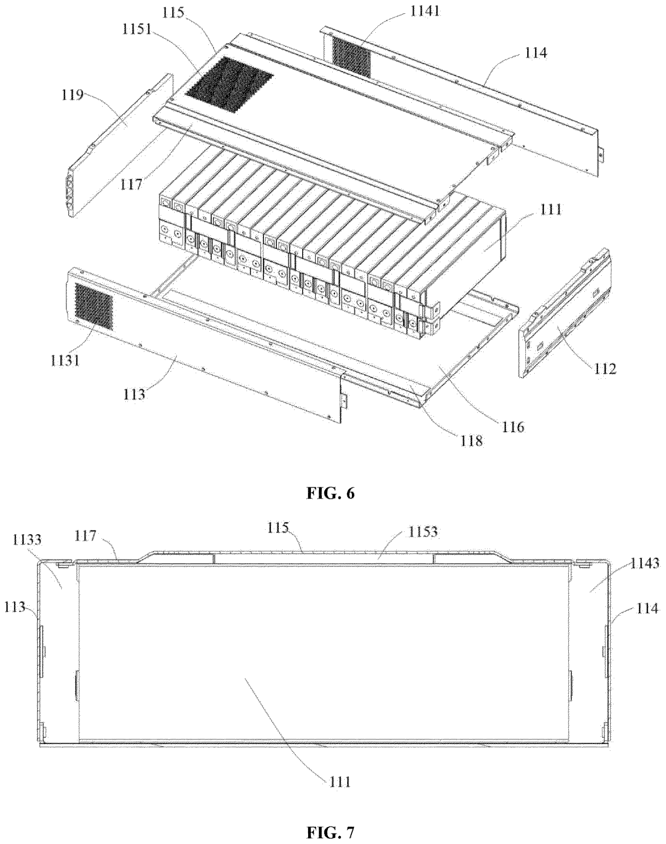

Referring to FIG. 5 to 7, the battery module 110 includes a battery pack 111 and a battery casing. The battery pack is housed within the battery casing and is arranged at intervals with at least a portion of the inner wall of the battery casing to form an air guide gap. The fixed frame 130 is arranged at the front end of the battery casing, and the rear end of the battery casing is provided with an air intake screen opening, wherein the air intake screen opening and the air guide gap are communicated.

The battery casing includes a front-end plate 112, a rear-end plate 119, a left-side plate 113, a right-side plate 114, a cover plate 115, and a bottom plate 116. One end of the battery pack 111 is provided with one of the front-end plate 112 and the rear-end plate 119, respectively, which is configured to apply pre-tightening force to the battery pack 111. The fixed frame 130 is connected to the front-end plate 112, and the fan 152 is arranged in correspondence with the front-end plate 112. The bottom plate 116 is arranged at the bottom side of the battery pack 111. The cover plate 115 is arranged at the top side of the battery pack 111 and is connected to the front-end plate 112 and the rear-end plate 119. The left-side plate 113 and the right-side plate 114 are respectively provided on one side of the battery pack 111, and are provided adjacent to the front-end plate 112 and the rear-end plate 119. Moreover, the left-side plate 113 is connected to the cover plate 115 and the bottom plate 116, and the right-side plate 114 is connected to the cover plate 115 and the bottom plate 116. The front-end plate 112, the rear-end plate 119, the left-side plate 113, the right-side plate 114, the cover plate 115, and the bottom plate 116 together form a holding chamber for accommodating the battery pack 111. The battery pack 111 is arranged at intervals with the left-side plate 113, the right-side plate 114, and the cover plate 115, thus forming the air guide gap.

In the embodiment, each end of the battery pack 111 is provided with one of the front-end plate 112 and the rear-end plate 119. The front-end plate 112 and the rear-end plate 119 can be made from extruded aluminum profiles or cast aluminum parts. After the battery pack 111, the front-end plate 112, and the rear-end plate 119 are placed and positioned on the production tooling, the front-end plate 112 and the rear-end plate 119 are pressed by a pressure machine, and the front-end plate 112 and the rear-end plate 119 exert a pre-tightening force on the battery pack 111, thereby compressing the battery pack 111 to the specified dimensions. After the front-end plate 112, the rear-end plate 119, and the battery pack 111 reach the specified dimensions under pre-tightening force, the bottom plate 116 can be mounted. The bottom plate 116, with fixed flanges, can be fixed to the front-end plate 112 and the rear-end plate 119 via bolts, thus eliminating the need for traditional laser welding. It saves the increased costs and man-hours associated with laser welding, and the structure is stronger and more reliable. The cover plate 115 can be mounted after the bottom plate 116 is mounted. The cover plate 115, with fixed flanges, can be fixed to the front-end plate 112 and the rear plate 119 via bolts, thus eliminating the need for traditional laser welding. It saves the increased costs and man-hours associated with laser welding, and the structure is stronger and more reliable. Finally, the left-side plate 113 and the right-side plate 114 are mounted. The left-side plate 113 and the right-side plate 114 can be fixed to the cover plate 115 and the bottom plate 116 via bolts.

It should be noted that the main structure of the modular energy storage battery 100 here is the battery module 110. The battery module 110 can serve as an independent structural unit, and can be combined with other types of fixed frames 130, electrical integration modules 150, and panels 170. Thereby, the modular energy storage battery 100 provided in the embodiment is made to have certain universal design elements and flexibility to enhance its applicability.

In the embodiment, the air intake screen opening includes a first air intake screen opening 1131, a second air intake screen opening 1141, and a third air intake screen opening 1151. The first air intake screen opening 1131 is arranged at an end of the left-side plate 113 away from the fixed frame 130, the second air intake screen opening 1141 is arranged at an end of the right-side plate 114 away from the fixed frame 130, and the third air intake screen opening 1151 is arranged at an end of the cover plate 115 away from the fixed frame 130. Air outlets communicating with the holding chamber are formed at both upper and lower sides of the front-end plate 112. The air outlets correspond to the fan 152. The first air intake screen opening 1131, the second air intake screen opening 1141, and the third air intake screen opening 1151 are communicated with the air guide gap. Specifically, the first air intake screen opening 1131, the second air intake screen opening 1141, and the third air intake screen opening 1151 are all through-hole structures that are honeycombed. The first air intake screen opening 1131 is provided proximate to a tail portion of the left-side plate 113, the second air intake screen opening 1141 is provided proximate to a tail portion of the right-side plate 114, and the third air intake screen opening 1151 is provided proximate a tail portion of the cover plate 115.

In the embodiment, edges on both sides of the cover plate 115 are provided with recessed platforms 117, wherein the recessed platforms 117 are abutted and supported on surfaces of the battery pack 111, and divide the holding chamber into a left air duct 1133, a right air duct 1143, and an upper air duct 1153. The left-side plate 113 and the corresponding surface of the battery pack 111 are arranged at intervals and form the left air duct 1133, the first air intake screen opening 1131 communicates with the left air duct 1133, the second air intake screen opening 1141 communicates with the right air duct 1143, and the third air intake screen opening 1151 communicates with the upper air duct 1153. Specifically, the recessed platforms 117 extend in the front-back direction. Inside the battery module 110, the recessed platform 117 on the cover plate 115 can enable a gap region to be formed between the remaining regions on the cover plate 115 and the surface of the battery pack 111. The region serves as the upper air duct and allows air intake through the third air intake screen opening 1151. At the same time, the safety gap region between the left-side plate 113 and the battery pack 111 can serve as the left air duct 1133, and the safety gap region between the right-side plate 114 and the battery pack 111 can serve as the right air duct 1143. By designing the structure of the recessed platform 117 on both edges of the cover plate 115, it is possible to make the upper air duct 1153, the left air duct 1133, and the right air duct 1143 independent of each other and not to interfere with each other. This can allow for the optimal design of flow rate and speed within each air duct, thus providing the best air-cooled design solution for the battery module.

In the embodiment, the bottom plate 116 is provided with an abutting protrusion 118. The abutting protrusion 118 abuts against the surface of the battery pack 111, so as to form a gap between the battery pack 111 and the surface of the bottom plate 116. The gap is filled with a thermally conductive adhesive layer, wherein the thermally conductive adhesive layer is configured to bond the battery pack 111 and the bottom plate 116 together and transfer the heat generated by the battery pack 111 to the bottom plate 116. Specifically, two abutting protrusions 118 are provided on the bottom plate 116. After the abutting protrusions 118 close contact the surface of the cell 1115, a gap is formed between the surface of the cell 1115 and the bottom plate 116. The gap is filled with a thermal conductive structural adhesive, which, when cured, forms a thermally conductive adhesive layer. The thermal conductive structural adhesive bonds the battery pack 111 and the bottom plate 116 together. Also, the thermal conductive structural adhesive has good thermal conductivity to equalize the temperature of the cell 1115 within the battery pack 111 and transfer the heat generated by the cell 1115 to the bottom plate 116. The bottom plate 116 can be made of aluminum with good thermal conductivity, which can effectively reduce the temperature of the battery pack 111 and extend the lifespan of the cell 1115.

Of course, in other preferred embodiments of the present invention, the abutting protrusions 118 can also be replaced with other materials such as rubber pads attached to the bottom plate 116.

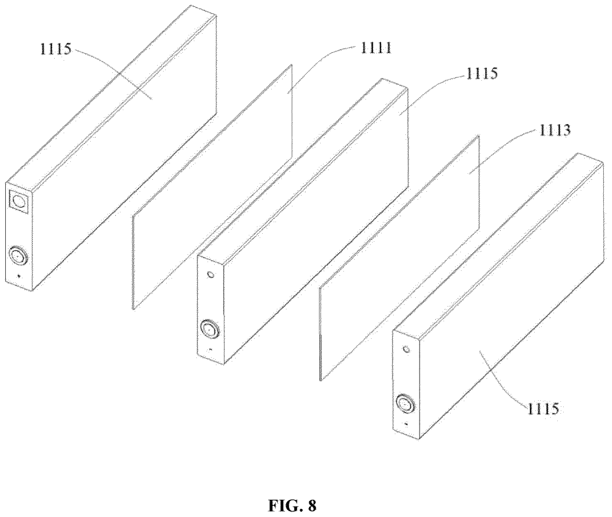

Referring to FIG. 8, the battery pack 111 includes multiple foams 1111, multiple insulation pads 1113, and multiple cells arranged by stacking 1115. Each foam 1111 is attached between two adjacent cells 1115. Each insulation pad 1113 is also attached between two adjacent cells 1115. The multiple foams 1111 and the multiple insulation pads 1113 are provided in a staggered manner. The foam 1111 or the insulation pad 1113 is arranged between every two adjacent cells 1115. Specifically, the battery pack 111 consists of a cell 1115, a foam 1111, and an insulation pad 1113. Three pieces of the cells 1115 are illustrated herein as an example. In specific implementation, the foam 1111 is attached between a large face (i.e., the larger side surface) of the first piece of the cell 1115 and a large face of the second piece of the cell 1115. An insulation pad 1113 is attached between the large surface of the second piece of the cell 1115 and a large face of the third piece of the cell 1115. Assembled in this manner in sequence, the foam 1111 and the insulation pad 1113 are used alternately between the large surfaces of the cells 1115. The foam 1111 is sandwiched between the large surfaces of the cells 1115, and the foam 1111 can effectively absorb the expansion of the cells 1115 during the lifespan. Additionally, the rebound force provided by the foam 1111 serves as a pre-tightening force during the assembly of the battery module 110, which contributes to the structural stability of the battery module 110. The insulation pad 1113 is sandwiched between the large surfaces of the cells 1115, and the insulation pad 1113 can effectively prevent thermal transfer between a cell 1115 undergoing thermal runaway and the normal cell 1115, thereby preventing thermal propagation and ensuring the safety of the battery module 110.

Of course, in other preferred embodiments, a foam 1111 can be attached between two or more pieces of cells 1115, with the insulation pad 1113 and the foam 1111 still used alternately. There is no specific limitation on the staggered form of the foam 1111 and the insulation pad 1113 herein.

Summing up the above, the embodiments provide a modular energy storage battery 100 in which a fixed frame 130 is detachably arranged at one end of the battery module 110, an electrical integration module 150 is embedded and mounted in the fixed frame 130, and a panel 170 is detachably arranged on the electrical integration module 150. By integrally mounting the panel 170, the electrical integration module 150, and the fixed frame 130, and detachably mounting them to the end portion of the battery module 110, a modular structure is achieved, thus making it very convenient for replacement or maintenance by directly removing the fixed frame 130. During actual mounting, the electrical integration module 150 can first be embedded and mounted in the fixed frame 130, with the panel 170 then mounted to form a modular structure. This modular structure can then be mounted at one end of the battery module 110, which is highly convenient. Additionally, it can facilitate the replacement of individual components, simplify processing and assembly, and avoid the electrical component 153 from sequentially and directly mounting on the end face of the battery module 110. It makes the end face structure of the battery module 110 more simplified and also reduces the manufacturing cost. At the same time, the panel 170 shields the electrical integration module 150, which can prevent more of the electrical structures from being exposed, so as to enhance safety and reliability. At the same time, by designing the fan 152 for air cooling and improving the design of the air ducts, the heat dissipation effect is enhanced, which can enable the quick removal of heat generated by the battery module 110. Additionally, through the structural design of the battery pack 111, it possesses good pre-tightening force and the ability to prevent thermal propagation, thus ensuring the safety of the battery module 110.

The above is only a preferred embodiment of the present invention, which is not intended to limit, and the present invention may have various changes and variations for those skilled in the art. Any modification, equivalent substitution, improvement, etc. made within the spirit and principles of the present invention shall be included in the scope of protection of the present invention.

## Claims

1. A modular energy storage battery, **characterized by** comprising a battery module (110), a fixed frame (130), an electrical integration module (150), and a panel (170), wherein the fixed frame (130) is detachably arranged at one end of the battery module (110); the electrical integration module (150) is detachably embedded within the fixed frame (130); and the panel (170) is detachably arranged on the electrical integration module (150).

2. The modular energy storage battery according to claim 1, wherein the electrical integration module (150) comprises an insulating frame (151) and an electrical component (153); the insulating frame (151) is detachably embedded within the fixed frame (130); the electrical component (153) is integrated and arranged on the insulating frame (151) and is electrically connected to the battery module (110).

3. The modular energy storage battery according to claim 2, wherein the electrical component (153) comprises an output bar (154) and a control unit (156) arranged at intervals; the output bar (154) is mounted on the insulating frame (151) via a buckle; the control unit (156) is embedded on a side of the insulating frame (151) away from the battery module (110) and is electrically connected to the battery module (110).

4. The modular energy storage battery according to claim 3, wherein the insulating frame (151) is further provided with a safety cover plate (157); the safety cover plate (157) is capped over the control unit (156) and detachably connected to the insulating frame (151) so as to protect the control unit (156).

5. The modular energy storage battery according to claim 3, wherein the electrical component (153) further comprises a grounding assembly (155), and the grounding assembly (155) is arranged on the insulating frame (151) and connects a grounding point of the control unit (156) to the fixed frame (130).

6. The modular energy storage battery according to claim 2, wherein the insulating frame (151) is further arranged with a fire sprinkler (158), and the fire sprinkler (158) penetrates the insulating frame (151) and corresponds to an end face of the battery module (110).

7. The modular energy storage battery according to claim 1, wherein the modular energy storage battery further comprises a fan (152), and the electrical integration module (150) is further arranged therein with an air guide gap; the fan (152) is arranged on the electrical integration module (150) and corresponds to the air guide gap, and is configured to extract a gas within the air guide gap.

8. The modular energy storage battery according to claim 7, wherein the battery module (110) comprises a battery pack (111) and a battery casing; the battery pack is housed within the battery casing; the fixed frame (130) is arranged at a front end of the battery casing, and the battery pack (111) and at least a portion of an inner wall of the battery casing are arranged at intervals, so as to form the air guide gap between the battery casing and the battery pack (111).

9. The modular energy storage battery according to claim 8, wherein a rear end of the battery casing is provided with an air intake screen opening, and the air intake screen opening and the air guide gap are communicated.

10. The modular energy storage battery according to claim 9, wherein the battery casing comprises a front-end plate (112), a rear-end plate, a left-side plate (113), a right-side plate (114), a cover plate (115), and a bottom plate (116); the front-end plate (112), the rear-end plate, the left-side plate (113), the right-side plate (114), the cover plate (115), and the bottom plate (116) together form a holding chamber; the battery pack is arranged within the holding chamber; and the battery pack (111) is arranged at intervals with the left-side plate (113), the right-side plate (114), and the cover plate (115), and the air guide gap is thus formed.

11. The modular energy storage battery according to claim 10, wherein the air intake screen opening comprises a first air intake screen opening (1131), a second air intake screen opening (1141), and a third air intake screen opening (1151); the first air intake screen opening (1131) is arranged at an end of the left-side plate (113) away from the fixed frame (130), the second air intake screen opening (1141) is arranged at an end of the right-side plate (114) away from the fixed frame (130), and the third air intake screen opening (1151) is arranged at an end of the cover plate (115) away from the fixed frame (130); air outlets communicating with the air guide gap are formed at both upper and lower sides of the front-end plate (112); the air outlets correspond to the fan (152); and the first air intake screen opening (1131), the second air intake screen opening (1141), and the third air intake screen opening (1151) are communicated with the air guide gap.

12. The modular energy storage battery according to claim 10, wherein edges on both sides of the cover plate (115) are provided with recessed platforms (117); the recessed platforms (117) are abutted and supported on surfaces of the battery pack (111), and divide the air guide gap into a left air duct (1133), a right air duct (1143), and an upper air duct (1153); and the left-side plate (113) and a corresponding surface of the battery pack (111) are arranged at intervals and form the left air duct (1133), the right-side plate (114) and a corresponding surface of the battery pack (111) form the right air duct, and the cover plate (115) and a corresponding surface of the battery pack (111) form the upper air duct.

13. The modular energy storage battery according to claim 8, wherein the battery pack (111) comprises multiple foams (1111), multiple insulation pads (1113), and multiple cells (1115) arranged by stacking; each foam (1111) is attached between two adjacent cells (1115); each insulation pad (1113) is attached between two adjacent cells (1115); the multiple foams (1111) and the multiple insulation pads (1113) are provided in a staggered manner; and a foam (1111) or an insulation pad (1113) is arranged between every two adjacent cells (1115).

14. The modular energy storage battery according to claim 8, wherein a bottom of the battery casing is provided with an abutting protrusion (118); the abutting protrusion (118) abuts against a surface of the battery pack (111), so as to form a gap between the battery pack (111) and a surface of the battery casing; and the gap is filled with a thermally conductive adhesive layer, wherein the thermally conductive adhesive layer is configured to bond the battery pack (111) and the battery casing together and transfer heat generated by the battery pack (111) to the battery casing.
